# EUROPÄISCHE PATENTSCHRIFT

(11) **EP 1 166 068 B1**
(45) Veröffentlichungstag und Bekanntmachung des Hinweises auf die Patenterteilung: **09.08.2006**
(21) Anmeldenummer: 00922584.8
(22) Anmeldetag: 31.03.2000
(51) Int. Cl.: G01K 13/02

(54) **VORRICHTUNG ZUR MESSUNG DER GETRIEBEÖLTEMPERATUR**
DEVICE FOR MEASURING THE GEARBOX OIL TEMPERATURE
DISPOSITIF DE MESURE DE LA TEMPERATURE DE L'HUILE D'UNE BOITE DE VITESSES

(30) Priorität: 06.04.1999 DE 19915471
(43) Veröffentlichungstag der Anmeldung: 02.01.2002
(73) Patentinhaber: ZF FRIEDRICHSHAFEN Aktiengesellschaft, 88038 Friedrichshafen (DE)
(72) Erfinder: HEINZELMANN, Karl-Fritz, D-88074 Meckenbeuren (DE); ALBRECHT, Harald, D-88094 Oberteuringen (DE)
(86) Internationale Anmeldenummer: PCT/EP2000/002866
(87) Internationale Veröffentlichungsnummer: WO 2000/060325

(56) Entgegenhaltungen:
- DE-A- 4 431 045
- DE-U- 29 611 668
- US-A- 4 622 851
- PATENT ABSTRACTS OF JAPAN vol. 1997, no. 03, 31. März 1997 (1997-03-31) -& JP 08 288498 A (HONDA MOTOR CO LTD), 1. November 1996 (1996-11-01)

## Beschreibung

Die Erfindung betrifft eine Vorrichtung zur Messung der temperatur eines Getriebeöls nach dem Oberbegriff des Anspruchs 1.

Bei Fahrzeuggetrieben ist es aus verschiedenen Gründen erforderlich, die Temperatur des im Getriebe verwendeten Schmieröls zu messen und verschiedenen Steuerungseinrichtungen zuzuführen. Die Temperatur wird benötigt insbesondere für Diagnoseaufgaben und zur Berechnung von Wartungs-Intervallen. Bei Überschreitungen einer vorgebbaren Temperatur-Schwelle wird an den Fahrzeugbenutzer eine Warnung ausgegeben.

Bisherige Systeme haben hierzu ein Meß-Element direkt im Getriebeölsumpf angeordnet. Für die Auswertung des Signals ist beispielsweise eine separate Elektronik erforderlich. Femer ist ein nicht unerheblicher Verkabelungsaufwand notwendig, der konstenintensiv ist und negative Einflüsse auf die Zuverlässigkeit ausübt.

So ist aus der DE 44 31 045 A1 eine Sensoranordnung zur gemeinsamen Messung der Drehzahl eines Fahrzeugrades und der Temperatur einer Bremse für dieses Fahrzeugrad bekannt geworden.

In der JP 08 288 498 A ist die Verdrahtung eines Temperatursensors und eines Drehzahlsensors beschrieben. Die Anordnung kann in einem Getriebegehäuse Anwendung finden.

Schließlich ist noch aus der DE 296 11 668 U1 ein Sensor zur Überwachung der Schmierölversorgung in Zahnradgetrieben bekannt, bei dem ein Sensor außerhalb des Ölsumpfes montiert ist und vom Ölnebel oder Spritzöl benetzt wird. Der Sensor sitzt als separates Bauteil im Getriebegehäuse oder kann auch nachträglich an vorhandene Getriebe nachgerüstet werden. Es liegt keine Verbindung des Sensors mit einer Getriebesteuerelektronik vor.

Der Erfindung liegt die Aufgabe zugrunde, eine Vorrichtung zum Messen der Getriebeöltemperatur aufzuzeigen, die mit geringem Aufwand eine gesteigerte Zuverlässigkeit bietet.

Die Aufgabe wird gelöst durch eine Vorrichtungen mit den Merkmalen der Ansprüche 1 oder 4. Ausgestaltungen sind Gegenstand von Unteransprüchen.

Erfindungsgemäß wird eine Vorrichtung zum Messen der Temperatur des Öls in einem Getriebegehäuse eines Getriebes mit einem Temperatursensor vorgeschlagen, der mit dem Öl in dem Getriebe in Kontakt treten kann. Dabei ist der Temperatursensor außerhalb des Ölsumpfes im Getriebegehäuse und unmittelbar in Bauteilen der Getriebesteuerelektronik angeordnet. Der Temperatursensor kann einerseits beim Betrieb des Getriebes mit dem Öl über die Benetzung mit Spritzöl in Kontakt treten. Dazu wird beispielsweise das Spritzöl durch rotierende Elemente des Getriebes aufgewirbelt, wobei die rotierenden Elemente Zahnräder des Getriebes sein können.

In einer vorteilhaften Ausgestaltung ist der Temperatursensor in unmittelbarer Nähe eines Drehzahlsensors mit rotierender Zählscheibe angeordnet, so daß das Spritzöl durch die Zählscheibe auf den Temperatursensor gespritzt wird.

Andererseits kann der Temperatursensor beim Betrieb des Getriebes mit dem Öl über einen Schmieröl-Kreislauf in Kontakt treten. Dabei kann der Temperatursensor im Druckbereich des Schmieröl-Kreislaufs angeordnet sein.

In einer Ausgestaltung ist der Temperatursensor in ein Getriebe-Schaltgerät integriert, das die Elektronik und die Schaltaktuatorik beinhaltet.

Eine weitere vorteilhafte Ausgestaltung zeigt den Temperatursensor in einem anderen Sensor integriert, insbesondere in einem Drehzahlsensor.

Die Erfindung wird anhand einer Zeichnung näher erläutert. Es zeigen:
- Fig. 1: ein Getriebe mit einer Spritzölbenetzung des Temperatursensors;
- Fig. 2: ein weiteres Getriebe mit Spritzölbenetzung;
- Fig. 3: den Temperatursensor in einer Druckölleitung und
- Fig. 4: die direkte Anbindung des Temperatursensors an die Getriebesteuerelektronik.

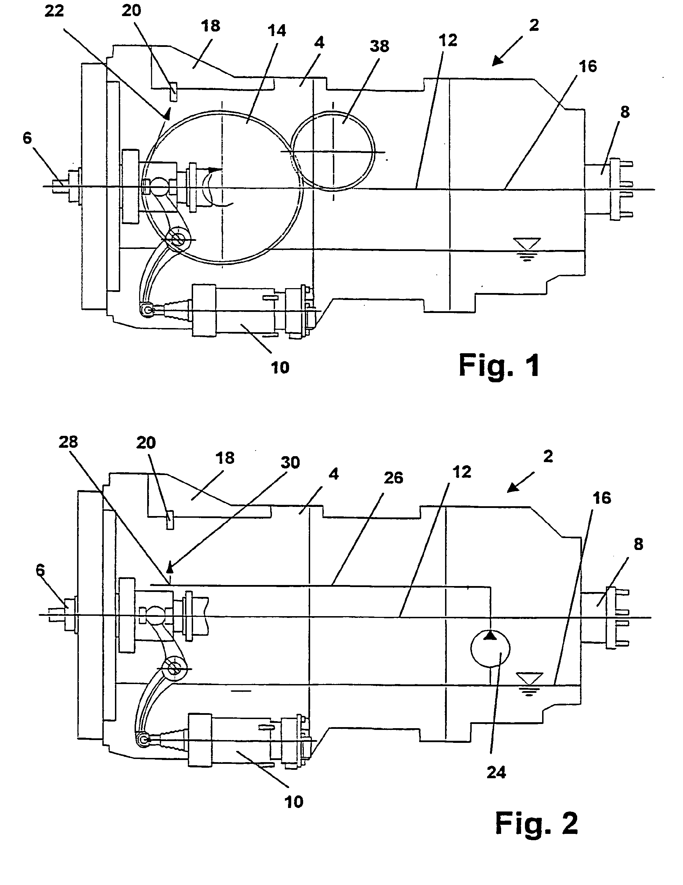

Die Fig. 1 zeigt ein Getriebe 2, das in einem Getriebegehäuse 4 eine Eingangswelle 6, eine Ausgangswelle 8 und einen Kupplungssteller 10 aufweist. Auf der Eingangswelle 6 und einer Hauptwelle 12 des Getriebes 2 befinden sich eine Vielzahl von Zahnrädern. Das hier dargestellte Zahnrad 14 schleudert bei seiner Rotation im Betrieb des Getriebes 2 Getriebeöl aus dem Ölsumpf 16 im Getriebegehäuse 4 herum. An der Oberseite des Getriebegehäuses 4 ist ein Getriebesteller 18 vorgesehen, der hier in das Getriebegehäuse 4 eingelassen ist. Der Getriebesteller 18 enthält sowohl die Getriebeelektronik als auch die Schaltaktuatorik. An der Unterseite des Getriebestellers 18 befindet sich außerhalb des Ölsumpfes 16 ein Temperatursensor 20. Das vom Zahnrad 14 herumgeschleuderte Öl, schematisch dargestellt durch den Pfeil 22, trifft auf den Temperatursensor 20 und tritt mit diesem in Kontakt. Dadurch kann in einer Auswerteelektronik, beispielsweise in dem Getriebesteller 18, die Temperatur des Getriebeöls ausgewertet werden. Durch das Zahnrad 14 wird auch eine Zählscheibe 38 in Rotation versetzt.

In der Fig. 2 sind für gleiche Bestandteile die gleichen Bezugszeichen verwendet worden. Hier ist der Ölsumpf 16 über eine Pumpe 24 mit einer Druckölleitung 26 verbunden. An der Druckölleitung 26 eines Schmieröl-Kreislaufs ist wenigstens eine Öffnung 28 vorgesehen, aus der Spritzöl auf den Temperatursensor 20 spritzt, schematisch dargestellt durch den Pfeil 30.

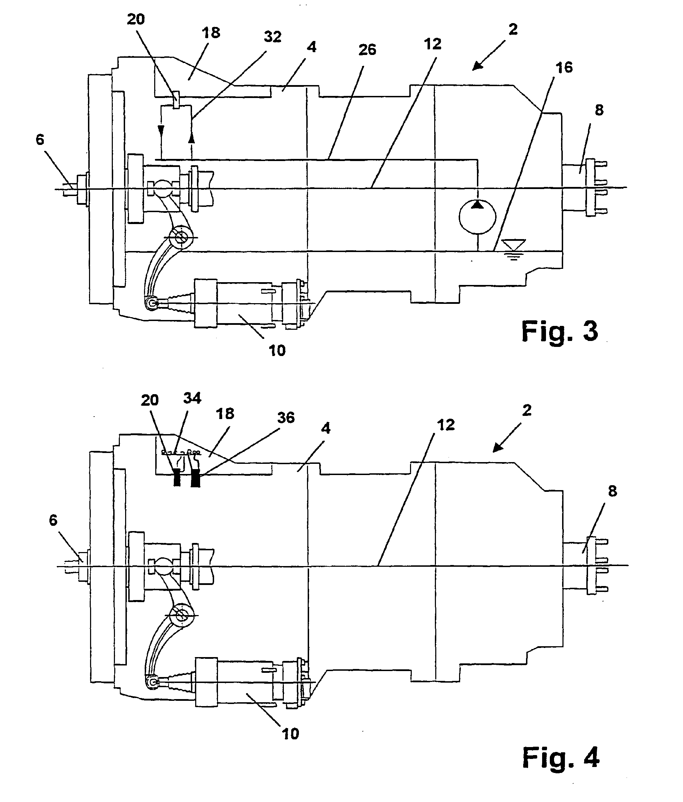

In der Fig. 3 sind für gleiche Bestandteile die gleichen Bezugszeichen verwendet worden. Hier zweigt von der Druckölleitung 26 ein Zweig 32 ab, in dem der Temperatursensor 20 direkt angeordnet ist. Das Getriebeöl durchströmt oder umströmt den Temperatursensor 20 unmittelbar.

In der Fig. 4 sind für gleiche Bestandteile die gleichen Bezugszeichen verwendet worden. Hier ist innerhalb des Getriebestellers 18 schematisch eine Leiterplatte 34 gezeigt. Der Temperatursensor 20 ist auf kürzestem Leitungsweg ohne Steckverbindungen unmittelbar mit der Leiterplatte verbunden oder auf dieser selbst angeordnet. Das Getriebe 2 kann auch einen an gleicher Stelle oder in unmittelbarer Nähe des Temperatursensors 20 eingestzten Drehzahlsensor 36 beishalten. Der Drehzahlsensor 36 kann mit einer Zählscheibe 38 zusammenwirken (siehe Fig. 1), durch deren Rotation Getriebeöl auf den Temperatursensor 20 geschleudert wird.

### Bezugszeichen

- 2: Getriebe
- 4: Getriebegehäuse
- 6: Eingangswelle
- 8: Ausgangswelle
- 10: Kupplungssteller
- 12: Hauptwelle
- 14: Zahnrad
- 16: Ölsumpf
- 18: Getriebesteller
- 20: Temperatursensor
- 22: Pfeil
- 24: Pumpe
- 26: Druckölleitung
- 28: Öffnung
- 30: Pfeil
- 32: Zweig
- 34: Leiterplatte
- 36: Drehzahlsensor
- 38: Zählscheibe

## Patentansprüche

1. Getriebe (2) mit
- einer Getriebesteuerelektronik,
- einem Getriebegehäuse (4), das einen Ölsumpf (16) beinhaltet und
- einer Vorrichtung, die einen Temperatursensor (20) beinhaltet, zum Messen der Temperatur eines Öls im Getriebegehäuse (4),
wobei
- die Getriebesteuerelektronik und der Temperatursensor (20) außerhalb des Ölsumpfes im Getriebegehäuse angeordnet sind und
- der Temperatursensor (20) unmittelbar in Bauteilen (34) der Getriebesteuerelektronik angeordnet ist und beim Betrieb des Getriebes mit dem Öl aus dem Ölsumpf (16) über eine Benetzung mit Spritzöl in Kontakt tritt.

2. Getriebe nach Anspruch 1, das einen Schmieröl-Kreislauf (26) beinhaltet, wobei der Temperatursensor (20) beim Betrieb des Getriebes mit dem Öl aus dem Ölsumpf (16) über den Schmieröl-Kreislauf (26) in Kontakt tritt.

3. Getriebe nach Anspruch 1, das einen Drehzahlsensor (36) mit rotierender Zählscheibe (38) beinhaltet, wobei der Temperatursensor in unmittelbarer Nähe des Drehzahlsensors (36) angeordnet ist, so dass beim Betrieb des Getriebes das Spritzöl durch die Zählscheibe (38) auf den Temperatursensor (20) gespritzt wird.

4. Getriebe (2) mit
- einer Getriebesteuerelektronik,
- einem Getriebegehäuse (4), das einen Ölsumpf (16) beinhaltet,
- einem Schmieröl-Kreislauf (26, 32) und
- einer Vorrichtung, die einen Temperatursensor (20) beinhaltet, zum Mesen der Temperatur eines Öls im Getriebegehäuse (4),
wobei
- die Getriebesteuerelektronik und der Temperatursensor (20) außerhalb des Ölsumpfes im Getriebegehäuse angeordnet sind und
- der Temperatursensor (20) unmittelbar in Bauteilen (34) der Getriebesteuerelektronik und in einem Zweig (32) des Schmieröl-Kreislaufs angeordnet ist.

5. Getriebe nach Anspruch 1, 2 oder 4, das einen weiteren Sensor, insbesondere einen Drehzahlsensor (36), beinhaltet, wobei der Temperatursensor (20) in dem weiteren Sensors (36) integriert ist.

6. Getriebe nach einem der Ansprüche 1 bis 5, das ein Getriebe-Schaltgerät (18) beinhaltet, wobei das Getriebe-Schaltgerät (18) die Getriebesteuerelektronik und eine Schaltaktuatorik beinhaltet.

## Claims

1. Gearbox (2) with
- an electronic gearbox control system,
- a gearbox casing (4) comprising an oil sump (16) and
- a device comprising a temperature sensor (20) for measuring the temperature of oil in the gearbox casing (4) ,
wherein
- the electronic gearbox control system and the temperature sensor (20) are disposed outside of the oil sump in the gearbox casing and
- the temperature sensor (20) is disposed directly in components (34) of the electronic gearbox control system and comes into contact with the oil from the oil sump (16) through wetting with splash oil during operation of the gearbox.

2. Gearbox according to Claim 1 comprising a lubricating oil circuit (26), wherein the temperature sensor (20) comes into contact with the oil from the sump (16) via the lubricating oil circuit (26) during operation of the gearbox.

3. Gearbox according to Claim 1 comprising a speed sensor (36) with rotating counting wheel (38), wherein the temperature sensor is disposed in the immediate vicinity of the speed sensor (36), so that the splash oil is splashed onto the temperature sensor (20) by the counting wheel (38) during operation of the gearbox.

4. Gearbox (2) with
- an electronic gearbox control system,
- a gearbox casing (4) comprising an oil sump (16),
- a lubricating oil circuit (26, 32) and
- a device comprising a temperature sensor (20) for measuring the temperature of oil in the gearbox casing (4),
wherein
- the electronic gearbox control system and the temperature sensor (20) are disposed outside of the oil sump in the gearbox casing and
- the temperature sensor (20) is disposed directly in components (34) of the electronic gearbox control system and in a branch (32) of the lubricating oil circuit.

5. Gearbox according to Claim 1, 2 or 4 comprising a further sensor, in particular a speed sensor (36), wherein the temperature sensor (20) is integrated into the further sensor (36).

6. Gearbox according to any one of Claims 1 to 5 comprising a gearshift device (18), wherein the gearshift device (18) comprises the electronic gearbox control system and a shift actuator system.

## Revendications

1. Boîte de vitesses (2) comprenant :
- une électronique de commande de boîte de vitesses,
- un carter de boîte de vitesses (4) qui comprend un carter d'huile (16) et,
- un dispositif qui comprend un capteur de température (20), destiné à mesurer la température d'une huile contenue dans le carter de boîte de vitesses (4),
dans laquelle
- l'électronique de commande de boîte de vitesses et le capteur de température (20) sont disposés dans le carter de boîte de vitesses en dehors du carter d'huile et
- le capteur de température (20) est disposé directement dans des composants (34) de l'électronique de commande de boîte de vitesses et entre en contact avec l'huile provenant du carter d'huile (16) pendant le fonctionnement de la boîte de vitesses par le fait qu'il est mouillé par de l'huile de barbotage.

2. Boîte de vitesses selon la revendication 1, qui comprend un circuit d'huile de lubrification (26), dans lequel, pendant le fonctionnement de la boîte de vitesses, le capteur de température (20) entre en contact avec l'huile provenant du carter d'huile (16) par l'intermédiaire du circuit d'huile de lubrification (26).

3. Boîte de vitesses selon la revendication 1, qui comprend un capteur de vitesse de rotation (36) comprenant lui-même un disque denté rotatif (38), dans lequel le capteur de température est disposé à proximité immédiate du capteur de vitesse de rotation (36) de sorte que, pendant le fonctionnement de la boîte de vitesses, l'huile de barbotage est projetée sur le capteur de température (20) par le disque denté (38).

4. Boîte de vitesses (2) comprenant :
- une électronique de commande de boîte de vitesses,
- un carter de boîte de vitesses (4) qui comprend un carter d'huile (16),
- un circuit d'huile de lubrification (26, 32) et
- un dispositif qui comprend un capteur de température (20) destiné à mesurer la température d'une huile présente dans le carter de boîte de vitesses (4),
dans laquelle
- l'électronique de commande de boîte de vitesses et le capteur de température (20) sont disposés dans le carter de boîte de vitesses en dehors du carter d'huile et
- le capteur de température (20) est disposé directement dans des composants (34) de l'électronique de commande de la boîte de vitesses et dans une branche (32) du circuit d'huile de lubrification.

5. Boîte de vitesses selon la revendication 1, 2 ou 4, qui comprend un autre capteur, en particulier un capteur de vitesse de rotation (36), le capteur de température (20) étant intégré dans l'autre capteur (36).

6. Boîte de vitesses selon l'une des revendications 1 à 5, qui comprend un appareil de commande de boîte de vitesses (18), l'appareil de commande de boîte de vitesses (18) comprenant l'électronique de commande de boîte de vitesses et un ensemble d'actionneurs de commande.
